Europäisches Patentamt

European Patent Office

Office européen des brevets

(19)

(11) Veröffentlichungsnummer: **0 247 049**
**B1**

(12) **EUROPÄISCHE PATENTSCHRIFT**

(45) Veröffentlichungstag der Patentschrift:
**30.08.89**

(51) Int. Cl.⁴: **F 16 D 25/12, F 16 D 13/72**

(21) Anmeldenummer: **86901385.4**

(22) Anmeldetag: **18.02.86**

(86) Internationale Anmeldenummer:
**PCT/EP 86/00081**

(87) Internationale Veröffentlichungsnummer:
**WO/8604968 (28.08.86 Gazette 86/19)**

(54) **ANFAHR- UND SCHALTKUPPLUNGSEINRICHTUNG.**

(30) Priorität: **21.02.85 PCT/EP85/00065**

(43) Veröffentlichungstag der Anmeldung:
**02.12.87 Patentblatt 87/49**

(45) Bekanntmachung des Hinweises auf die Patenterteilung: **30.08.89 Patentblatt 89/35**

(84) Benannte Vertragsstaaten:
**DE FR SE**

(56) Entgegenhaltungen:
**DE-C- 727 545**
**DE-C- 754 096**
**DE-C-29 419 35**
**FR-A- 1 239 144**
**FR-A- 2 330 915**
**GB-A- 145 110**

(73) Patentinhaber: **ZAHNRADFABRIK FRIEDRICHSHA-
FEN AKTIENGESELLSCHAFT**
**Löwentaler Strasse 100 Postfach 2520**
**D-7990 Friedrichshafen 1 (DE)**

(72) Erfinder: **BIEBER, Gerold**
**Mühlengärten 7**
**D-7994 Langenargen (DE)**
Erfinder: **EBNER, Otto**
**Eichelen 10**
**D-7996 Meckenbeuren (DE)**

(74) Vertreter: **Raue, Reimund**
**Zahnradfabrik Friedrichshafen AG Löwentaler
Strasse 100 Postfach 2520**
**D-7990 Friedrichshafen 1 (DE)**

## Beschreibung

Die Erfindung betrifft eine Anfahr- und Schaltkupplungseinrichtung nach dem Oberbegriff von Anspruch 1.

Aus der DE-PS 294 1935 ist eine vergleichbare Kupplung bekannt, die in Verbindung mit einem Drehmomentwandler angeordnet ist und deshalb vorwiegend als Schaltkupplung zur Zugkraftunterbrechung nötig und ausgelegt ist. Um möglichst hohe Leistungen übertragen zu können, werden den Kupplungslamellen Schmier- und Kühlöl aus dem Druckölsystem des Wandlers bzw. des Getriebes zugeführt, wobei die Zuführung nur während des Einkuppelvorganges erfolgt und durch eine geeignete Gestaltung in der Kupplung sich kein eigener Sumpf bilden kann. Dadurch sollen die Kupplungsmasse und die Pantschverluste der Kupplung gering gehalten werden.

In der Rutschphase der Kupplung muß eine ausreichende Schmierung vorhanden sein, um die Reibungswärme zu begrenzen. Um eine Überhitzung zu vermeiden, ist die trotzdem entstehende Reibungswärme sicher abzuführen. Das hat zur Folge, daß eine Pumpe mit einer größeren Fördermenge vorgesehen werden muß, weil auch bei geringeren Drehzahlen ausreichend Schmier- und Kühlmittel benötigt wird. Bei höheren Drehzahlen wird deshalb dem Antriebsstrang eine zu hohe Leistung entnommen, so daß diese fehlt und die Anlage unwirtschaftlich arbeitet.

Es ist deshalb Aufgabe der Erfindung, eine Anfahr- und Schaltkupplungseinrichtung nach dem Oberbegriff von Anspruch 1 dahingehend weiterzuentwickeln, daß die Kupplung im geöffneten und geschlossenen Zustand mit minimalen Verlusten arbeitet und in der Rutschphase gut geschmiert und sicher gekühlt wird.

Diese Aufgabe wird mit den kennzeichnenden Merkmalen vom Anspruch 1 erfüllt.

Infolge der Flutung des Kupplungsraumes im Bereich der Lamellen wird bereits eine optimale Schmierung erreicht und dabei die Reibungswärme minimiert. Infolge der relativ großen Flüssigkeitsmenge ist auch die Ableitung dieser Wärme gut, wozu auch ein erstes Schöpfrohr beiträgt, das die Befüllung des Kupplungsraumes begrenzt und heißes Öl ableitet.

Ein zweites Schöpfrohr sichert die schnelle Entleerung des Kupplungsraumes, wobei Schöpfrohre sehr einfach im Aufbau sind und nur einen geringen Fertigungsaufwand verursachen.

Die volle Flutung des Kupplungsraumes im Bereich der mit unterschiedlicher Drehzahl sich bewegenden Außen- und Innenlamellen läßt auch eine längere Rutschphase ohne Schädigung der Lamellen zu.

In den Ansprüchen 2 bis 7 wird die Erfindung besonders vorteilhaft ausgestaltet.

So läßt die Anordnung eines autarken Schmier- und Kühlölkreislaufes für die Anfahr- und Schaltkupplung eine Optimierung sowohl im Schmierkreis für das Getriebe wie auch für die Kupplung zu. Der hohe und stoßweise anfallende Schmierölbedarf für die Kupplung muß bei der Bereitstellung für die Getriebeschmierung nicht mehr berücksichtigt werden. Die Pumpe für die Getriebeschmierung kann also kleiner ausgelegt werden, so daß sich der Wirkungsgrad erheblich verbessert.

Für die Anfahr- und Schaltkupplung wird der Schmierdruck nur in der Schließphase aufgebaut, also nur dann, wenn der Bedarf auch wirklich vorhanden ist. Bei der Auslegung muß die Antriebsdrehzahl vor dem Getriebe z.B. zwischen 500 und 2 500 U/min nicht mehr berücksichtigt werden, so daß hohe Wirkungsgradverluste entfallen. Die Erzeugung des Schmieröldruckes für die Anfahr- und Schaltkupplung über die schon vorhandene Druckluftanlage, und in Verbindung mit einem zeitgetakteten Magnetventil, ergibt eine sehr einfache Lösung. Wird der Speicher für das Schmier- und Kühlmittel noch mit einem federbelasteten Kolben versehen, kann der Speicher zum Ansaugen des Schmiermittels aus dem Schmiermittelbehälter benutzt werden. Durch die Anordnung von Kühlrippen am Schmiermittelbehälter und am Gehäuse des Speichers wird deren Funktion noch erweitert.

Weitere Einzelheiten der Erfindung werden anhand von einem Ausführungsbeispiel und von einer Zeichnung erläutert, in der eine Anfahr- und Schaltkupplungseinrichtung schematisch dargestellt ist.

Die Lamellenkupplung 1 ist als Anfahrkupplung ausgelegt und wird als Schalt- und Trennkupplung gleichfalls verwendet. Der kinematische Aufbau entspricht einer allgemein bekannten Trockentrennkupplung und ist z.B. federkraftschließend, während die Öffnung hydraulisch aber auch pneumatisch z. B. über einen Ringkolben 15 erfolgt. In bekannter Weise sind Außenlamellen 11 und Innenlamellen 12 angeordnet, und über ein Schmieröldruckleitung 2 wird der Kupplung Schmieröl zugeführt. Im Kupplungsraum 6 sind neben der Betätigungseinrichtung noch zwei Schöpfrohre 3, 4 angeordnet, wobei die Öffnung 31 des ersten Schöpfrohres 3, in radialer Richtung gesehen, sich etwa auf gleicher Höle mit den inneren Begrenzungen der Außenlamellen 11 befindet. Das zweite Schöpfrohr 4 ist so angeordnet, daß sich die Öffnung 41 unmittelbar am Grund des Kupplungsraumes 6 nahe der Wandung 61, die radial außen liegt, befindet. Das erste Schöpfrohr 3 ist direkt und das zweite Schopfrohr 4 über ein Steuerventil 5 mit einem Ölsammelbehälter 7 verbunden. Neben diesen ist noch ein Speicher 8 angeordnet, dessen Kolben 81 diesen in einen Öldruckraum 83 mit einer Feder 82 und in einen Druckraum für Luft 87 trennt. Vom Öldruckraum 83 zum Ölsammelbehälter 7 führt eine Saugleitung 73, in der noch ein Rückschlagventil 71 angeordnet ist. Weiter führt aus diesem Druckraum über ein weiteres Rückschlagventil 84 eine Schmieröldruckleitung 2 in den Kupplungsraum 6. Der Druckraum 87 ist über ein zeitgetaktetes Magnetventil 9 mit einer Druckluftquelle 91 verbunden. Am Ölsammelbehälter 7 und am Gehäuse 85 des Speichers 8 sind noch Kühlrippen 72, 86 angeordnet. Das zeitgetaktete Magnetventil 9 wird entweder über Druck- und Endschalter 92, 93 bzw. über eine Elektronik Leitung 94 gesteuert.

Die Anfahr- und Schaltkupplungseinrichtung wirkt wie folgt :

Bei geschlossener und geöffneter Kupplung 1 ist der Kupplungsraum 6 trocken. Am Steuerventil 5 liegt bei geschlossener Kupplung kein Drucksignal an, das Ventil befindet sich in der linken Endlage — wie gezeichnet. Bei geöffneter Kupplung wird durch einen hohen, anliegenden Druck das Steuerventil 5 in die rechte Endlage gedrückt. In beiden Endlagen ist das Schöpfrohr 4 mit dem Ölsammelbehälter 7 verbunden.

Der Druckraum 87 vom Speicher 8 ist über das Magnetventil 9 entlüftet. Die Feder 82 hat den Kolben 81 in die dargestellte linke Endlage gedrückt und dabei hat sich über die Saugleitung 73 und das Rückschlagventil 71 der Druckraum 83 mit Schmier- und Kühlöl gefüllt.

Während der Reibphase, also beim Sch-ießen der Kupplung 1, wird diese vorrangig über ein autarkes Speicher-Schmiersystem mit einer hohen Leistungsfähigkeit gekühlt.

Mit Beginn der Kupplungsschließphase gibt z. B. die Kupplungselektronik ein elektrisches Signal über die Leitung 94 auf das zeitgetaktete Magnetventil 9. Dieses schlatet um (Zeittakt 1) und die Druckluft schiebt das im Druckraum 83 des Speichers 8 befindliche Öl über das Rückschlagventil 84 in den Kupplungsraum 6. Ist der Zeittakt 1 abgelaufen, so schaltet das Magnetventil in Ausgangsstellung (Zeittakt 2) und der Speicher 8 wird erneut in der bereits beschriebenen Weise befüllt. Dieser Vorgang wiederholt sich fortwährend, solange das elektrische Signal von der Kupplungselektronik am Magnetventil 9 ansteht und damit die Kupplung noch nicht geschlossen ist. Während der gesamten Reibphase wird das Steuerventil 5 in Mittelstellung gehalten und verhindert damit den Ölabfluß über das zweite Schöpfrohr 4 in den Ölsammelbehälter 7. Ist die Kupplung im Bereich der Reibflächen der Außenlamellen 11 und Innenlamellen 12 voll geflutet — Ölstand 13 — und die Reibphase infolge eines z. B. Anfahrvorganges noch nicht beendet, wird das weitergeförderte Schmier- und Kühlöl über das erste Schöpfrohr 3 und die Leitung 35 direkt in den Ölsammelbehälter zurückgefördert. Mit dem Ende der Reibphase schaltet das Steuerventil 5 durch Federrückstellung auf Durchfluß — wie gezeichnet — und entleert über das zweite Schöpfrohr 4 den Kupplungsraum 6. Das Signal für das zeitgetaktete Magnetventil 9 wird ebenfalls durch einen Schalter 92, 93 oder durch die nicht dargestellte Elektronik unterbrochen, so daß sich der Speicher 8, wie bereits beschrieben, wieder füllt.

Die Erfindung ist nicht auf das Ausführungsbeispiel beschränkt. So können z. B. für die Schöpfrohre 3, 4 auch andere bekannte Fördereinrichtungen verwendet werden.

Bezugszeichen

| | |
|---|---|
| 1 | Lamellenkupplung |
| 11 | Außenlamellen |
| 12 | Innenlamellen |
| 13 | Ölstand |
| 14 | Kupplungehäuse |
| 15 | Ringkolben |
| 2 | Schmieröldruckleitung |
| 21 | Öffnung |
| 3 | Erstes Schöpfrohr |
| 31 | Öffnung |
| 35 | Leitung |
| 4 | Zweites Schöpfrohr |
| 41 | Öffnung |
| 5 | Steuerventil |
| 6 | Kupplungsraum (Ringraum) |
| 61 | Wandung |
| 7 | Ölsammelbehälter |
| 71 | Rückschlagventil |
| 72 | Kühlrippen |
| 73 | Saugleitung |
| 8 | Speicher |
| 81 | Kolben |
| 82 | Feder |
| 83 | Öldruckraum |
| 84 | Rückschlagventil |
| 85 | Gehäuse |
| 86 | Kühlrippen |
| 87 | Druckraum (Luft) |
| 9 | zeitgetaktetes Magnetventil |
| 91 | Druckluft |
| 92 | Druckschalter |
| 93 | Endschalter |
| 94 | Leitung zur Elektronik |

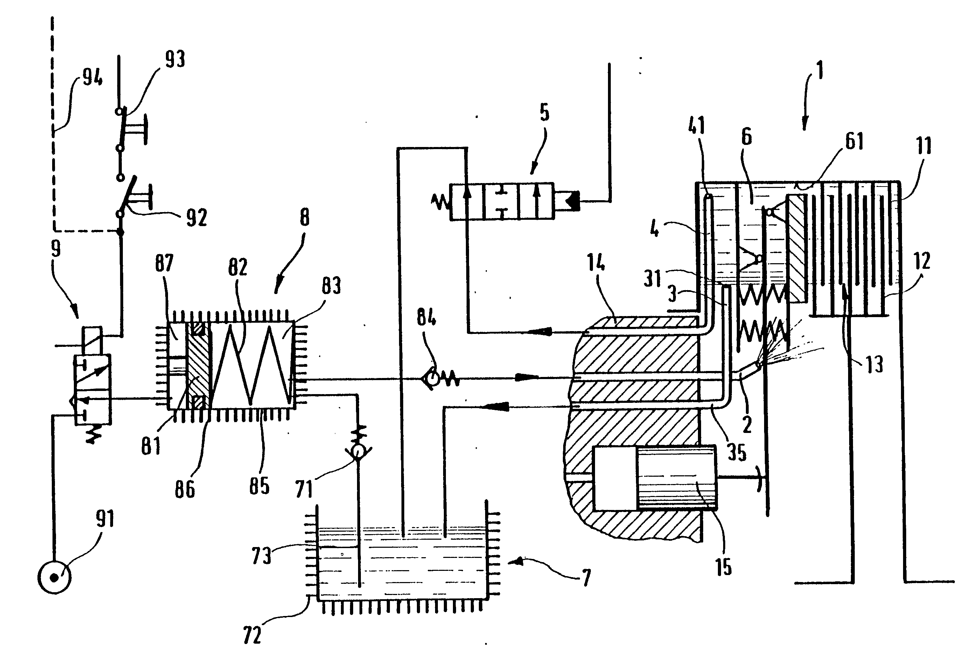

## Patentansprüche

1. Anfahr- und Schaltkupplungseinrichtung für Kraftfahrzeuge mit einer Lamellenkupplung (1) und einer Schmieröldruckleitung (2), über die nur in der Reibphase Schmierund Kühlöl in den Kupplungsraum (6) geleitet wird, wobei die Lamellenkupplung (1) im geschlossenen bzw. offenen Zustand trocken ist, dadurch gekennzeichnet, daß der Kupplungsraum (6) im Bereich der Außen- und Innenlamellen (11, 12) der Kupplung (1) über die Schmieröldruckleitung (2) geflutet wird und ein erstes Schöpfrohr (3) derart radial innen angeordnet ist, daß es die Befüllung mit Schmier- und Kühlöl begrenzt und ein zweites Schöpfrohr (4) mit der Öffnung (41) nahe der radial außenliegenden Wandung (61) des Kupplungsraumes (6) angeordnet ist und in Verbindung mit einem Steuerventil (5) die Schnellentleerung des Kupplungsraumes (6) bewirkt.

2. Anfahr- und Schaltkupplungseinrichtung nach Anspruch 1, dadurch gekennzeichnet, daß das erste Schöpfrohr (3) am Kupplungsgehäuse (14) so angeordnet ist, daß die Öffnung (31) sich mit den radial nach innen gerichteten Enden der Außenlamellen (11) auf gleicher Höhe befindet und daß das erste Schöpfrohr direkt und das zweite Schöpfrohr (4) über das Steuerventil (5) mit dem Ölsammelbehälter (7) verbunden sind.

3. Anfahr- und Schaltkupplungseinrichtung nach Anspruch 2, dadurch gekennzeichnet, daß zur Schmier- und Kühlölversorgung der Anfahr- und Schaltkupplung (1) ein von der Schmierölversorgung für das Getriebe unabhängiger Schmierkreislauf (2 bis 9) angeordnet ist.

4. Anfahr- und Schaltkupplungseinrichtung nach Anspruch 3, dadurch gekennzeichnet, daß im Schmierkreis für die Anfahr- und Schaltkupplung (1) ein Speicher (8) in Verbindung mit einem Schmiermittelbehälter (7) und zwischen einer Druckmittelquelle (91) und dem Speicher (8) ein zeitgetaktetes Magnetventil (9) angeordnet sind daß ein Öldruckraum (83) des Speichers (8) über eine mit einem Rückschlagventil (71) versehene Saugleitung (73) mit dem Schmiermittelbehälter (7) verbunden ist, daß im Öldruckraum (83) eine auf einen Kolben (81) wirkende Druckfeder (82) angeordnet ist, und daß der Öldruckraum (83) des Speichers (8) mit dem Kupplungsraum (6) der Anfahr- und Schaltkupplung (1) über die Druckleitung (2) verbunden und darin Rückschlagventil (84) so angeordnet ist, daß Schmieröl nur in Richtung der Kupplung (1) fließen kann.

5. Anfahr- und Schaltkupplungseinrichtung nach Anspruch 4, dadurch gekennzeichnet, daß beim Schließvorgang (also in der Reibphase der Anfahr- und Schaltkupplung (1) ein zeitgetaktetes Magnetventil (9) bis zum Übertragen des vollen Drehmomentes sowohl das Nachsaugen des Schmieröles in den Speicher (8) — Druckluft (91) ist abgesperrt — wie auch die Flutung des Kupplungsraumes (6) bewirkt.

6. Anfahr- und Schaltkupplungseinrichtung nach Anspruch 1, dadurch gekennzeichnet, daß das Steuerventil (5) ein 3/2-Wegeventil ist, das nur in der Rutschphase der Kupplung geschlossen ist und sowohl bei geöffneter als auch bei geschlossener Kupplung (1) den Kupplungsraum (6) mit dem Schmiermittelbehälter (7) verbindet.

7. Anfahr- und Schaltkupplungseinrichtung nach Anspruch 4, dadurch gekennzeichnet, daß am Schmiermittelhälter (7) und am Gehäuse (85) des Speichers (8) Kühlrippen (72, 86) angeordnet sind.

## Claims

1. Starting and selector clutch unit for vehicles equipped with a multi-disc clutch (1) which operates dry when closed or open, fitted with a pressurised lube oil line (2) to supply lubricating and cooling oil to the clutch chamber (6) during the friction phase, characterised in that the clutch chamber (6) around the inner and outer clutch discs (11, 12) of cluth (1) is flooded by the pressurised lube oil line (2), with one scavenge pipe (3) radially mounted inside such that the lubricating and cooling oil supply is restricted and with a second scavenge pipe (4) whose aperture (41) is close to the radial outer wall (61) of the clutch chamber (6) and which operates together with a pilot valve (5) for quick dumping action of the clutch chamber (6).

2. Starting and selecting clutch unit according to claim 1, and characterised in that the first scavenge pipe (3) is arranged on the clutch housing (14) in such a way that its aperture (31) is located at the same height as the inwards facing radial edges of the outer discs (11) and in that the first scavenge pipe is connected directly to the oil sump (7) whereas the second scavenge pipe (4) is connected to it via control valve (5).

3. Starting and selecting clutch unit according to claim 2, characterised in that the starting clutch (1) is supplied with lubricating and cooling oil by a lube oil circuit independent of the gearbox lube supply (2 oil g).

4. Starting and selecting clutch unit according to claim 3, characterised in that the lube circuit for the starting and selector clutch (1) is equipped with a reservoir (8) connected to a lubricant tank (7) and with a time cycle-dependent solenoid (9) located between a pressure source (91) and the reservoir (8), in that an oil pressure chamber (83) in the reservoir (8) is connected to the lubricant tank (7) by means of a suction pipe (73) fitted with a check valve (71), in that a compression spring (82) in oil pressure chamber (83) acts upon a piston (81), in that the oil pressure chamber (83) in the reservoir (8) is connected to the clutch chamber (6) of the starting and selector clutch unit (1) by means of a pressure line (2) in which a check valve (84) is located in such a way that lube oil can only flow towards clutch (1).

5. Starting and selecting clutch unit according to claim 4, characterised in that, while closing (i.e. during friction phase of starting and selector clutch unit (1)) and until maximum torgue is transmitted, a time cycle-dependent solenoid valve (9) causes clutch chamber (6) to be flooded with lube oil and the reservoir (8) to be replenished with lube oil-compressed air (91) is shut off.

6. Starting and selector clutch unit according to claim 1, characterised in that control valve (5) is a 3/2 way valve closed only during the slip phase of the clutch (1) and which connects the clutch chamber (6) and oil sump (7) irrespective of whether the clutch (1) is open or closed.

7. Starting and separating clutch according to claim 4, characterised in that cooling webs (72, 86) are arranged on oil sump (7) and housing (85) of the reservoir (8).

## Revendications

1. Dispositif d'embrayage pour le démarrage et les changements de vitesses dans des véhicules automobiles, comportant un embrayage à disques multiples (1) et une conduite de lubrification sous pression (2) par laquelle de l'huile de lubrification et de refroidissement est amenée dans la chambre d'embrayage (6) uniquement pendant la phase de friction, l'embrayage à disques multiples (1) restant sec en position enclenchée et en position déclenchée, caractérisé en ce que la chambre d'embrayage (6) est remplie d'huile dans la zone des disques extérieurs et intérieurs (11, 12) de l'embrayage (1) au moyen de la conduite d'huile de lubrification sous pression (2), en ce qu'un premier tube de puisage (3) est disposé radialement à l'intérieur de manière à limiter le remplissage d'huile de lubrification et de refroidissement, et en ce qu'un second tube de puisage (4) est disposé de manière à avoir son orifice (41) près de la paroi (61) du côté radial extérieur de la chambre d'embrayage (6) et coopère avec une soupape de commande (5) pour effectuer une vidange rapide de la chambre d'embrayage (6).

2. Dispositif d'embrayage selon la revendication 1, caractérisé en ce que le premier tube de puisage (3) est monté sur le carter (14) de l'embrayage de manière que son orifice (31) se trouve au même niveau que les bords du côté radial intérieur des disques extérieurs (11), et en ce que le premier tube de puisage est relié directement au réservoir collecteur d'huile (7) et le second tube de puisage (4) est relié à ce réservoir (7) à travers ladite soupage de commande (5).

3. Dispositif d'embrayage selon la revendication 2, caractérisé en ce qu'un circuit de lubrification (2 à 9) indépendant de l'alimentation en huile de lubrification de la transmission est prévu pour alimenter en huide de lubrification et de refroidissement l'embrayage de démarrage et de changement de vitesses (1).

4. Dispositif d'embrayage selon la revendication 3, caractérisé en ce que le circuit de lubrification de l'embrayage (1) comporte un accumulateur (8) relié à un réservoir de lubrifiant (7) et une électrovanne (9) ) à actionnement cadencé, montée entre une source de fluide sous pression (91) et l'accumulateur (8), en ce qu'une chambre de pression d'huile (83) de l'accumulateur (8) est reliée au réservoir de lubrifiant (7) par un conduit d'aspiration (73) pourvu d'un clapet anti-retour (71), en ce qu'un ressort de compression (82) agissant sur un piston (81) est disposé dans ladite chambre de pression d'huile (83), et en ce que la chambre de pression d'huile (83) de l'accumulateur (8) est reliée à la chambre d'embrayage (6) de l'embrayage de démarrage et de changement de vitesses (1) par la conduite d'huile sous pression (2), dans laquelle un clapet anti-retour (84) est monté de façon que l'huile ne puisse circuler qu'en direction de l'embrayage (1).

5. Dispositif d'embrayage selon la revendication 4, caractérisé en ce que, pendant le processus d'enclenchement (c'est-à-dire pendant la phase de friction de l'embrayage de démarrage et de changement de vitesses (1)), une électrovanne (9) à actionnement cadencé commande aussi bien l'aspiration de l'huile de lubrification dans l'accumulateur (8) — quand l'air comprimé (91) est bloqué — que le remplissage de la chambre d'embrayage (6), jusqu'à ce que le couple total soit transmis.

6. Dispositif d'embrayage selon la revendication 1, caractérisé en ce que ladite soupape de commande (5) est une soupape à 3/2 voies qui est formée uniquement pendant la phase de friction de l'embrayage et qui relie la chambre d'embrayage (6) au réservoir de lubrifiant (7) aussi bien quand l'embrayage (1) est déclenché que lorsqu'il est enclenché.

7. Dispositif d'embrayage selon la revendication 4, caractérisé en ce que des ailettes de refroidissement (72, 86) sont disposées sur le réservoir de lubrifiant (7) et sur le carter (85) de l'accumulateur (8).